# EUROPEAN PATENT SPECIFICATION

(11) **EP 1 057 273 B1**
(45) Date of publication and mention of the grant of the patent: **08.11.2006**
(21) Application number: 99964591.4
(22) Date of filing: 13.12.1999
(51) Int. Cl.: H04B 1/04, H04L 27/20

(54) **Transmission circuit for a radio frequency signal**
Sendeschaltung für ein Hochfrequenzsignal
Circuit de transmission de signaux radiofréquence

(30) Priority: 22.12.1998 FR 9816208
(43) Date of publication of application: 06.12.2000
(73) Proprietor: Koninklijke Philips Electronics N.V., 5621 BA Eindhoven (NL)
(72) Inventor: PHILIPPE, Pascal, NL-5656 AA Eindhoven (NL)
(74) Representative: van Oudheusden-Perset, Laure E.
(86) International application number: PCT/EP1999/010052
(87) International publication number: WO 2000/038334

(56) References cited:
- EP-A- 0 426 560
- WO-A-00/36742
- US-A- 4 213 094
- YAMAJI T: "VECTOR PULSE-DENSITY MODULATION" ELECTRONICS LETTERS, vol. 30, no. 2, 29 September 1994 (1994-09-29), page 1652/1653 XP000474899 ISSN: 0013-5194
- FILIOL ET AL: "AN AGILE ISM BAND FREQUENCY SYNTHESIZER WITH BUILT-IN GMSK DATA MODULATION" IEEE JOURNAL OF SOLID-STATE CIRCUITS, vol. 33, no. 7, 31 July 1998 (1998-07-31), pages 998-1008, XP002112769

## Description

### FIELD OF THE INVENTION

The present invention relates to a transmission circuit and to a radiotelephone apparatus comprising a transmission circuit.

### BACKGROUND OF THE INVENTION

Transmission circuits are currently used, among other possible applications, in radiotelephones in which a signal processing circuit delivers to the transmission circuit a digital input signal in view of its transmission via an antenna. In known transmission circuits, the digital input signal is split up into a first and a second digital input signal in phase quadrature with each other. These first and second input signals are subjected to a digital/analog conversion and to a modulation called IQ modulation during which they are mixed with two phase quadrature signals coming from an oscillator and having an intermediate frequency, and are then combined again for forming an output signal.

A transmission circuit is known from the document "vector pulse-density modulation" by Yamaji T, electronics letters, vol. 30, n° 2, 29 September 1994, page 1652/1653. It discloses a modulator comprising a sigma/delta module receiving quadrature phase input signals representative of data and providing a control signal to a multiplexer. The multiplexer has three inputs receiving three oscillator signals shifted by 2π/3 and an output forming the output of the modulator.

### SUMMARY OF THE INVENTION

The invention is linked with the following considerations: The IQ modulation makes it necessary to use analog mixers which are subjected to considerable constraints with respect to linearity and are thus complex and costly to manufacture. Furthermore, the digital/analog conversion of the first and second signals calls for two digital/analog converters which also have a complex structure and, moreover, introduce a noise in the converted signals, due to a sampling that is necessary for the conversion. A filtering device must thus be inserted between the digital/analog converters and the analog mixers, which further increases the complexity and manufacturing costs of the first frequency converter. Finally, another filtering device must be inserted between the first and the second frequency converter in order to eliminate undesirable signals which are the product of parasitic modulations introduced in the output signal of the first frequency converter by the analog mixers.

It is an object of the present invention to remedy these drawbacks by proposing a transmission circuit in which the structure of the first frequency converter is simplified considerably and generates fewer undesirable signals than in known structures.

A transmission circuit in accordance with the invention is defined in claim 1, which is appended to this description.

In this transmission circuit, a modulator can use an input signal in its digital form and the digital/analog converters are useless. The omission of these converters enables to reduce the noise generated by the modulator and renders the filtering devices used in the known transmission circuit superfluous, which accordingly reduces the complexity of the transmission circuit according to the invention. Furthermore, it will be demonstrated in the following of the description that a splitting up of the input signal into a first and a second input signal, which are in phase quadrature with each other, indispensable for realizing the IQ modulation in known transmission circuits, may be avoided in certain embodiments of the invention, which will further enable to simplify the structure of the transmission circuit.

This illustrates well the great simplicity the modulator may feature thanks to the invention. In accordance with the operation principle of a delta/sigma module, well known to a person of ordinary skill in the art and notably described in the publication "Delta/sigma Converters" by Messers, Norsworthy, Schreier and Temes, the delta/sigma module produces a signal that oscillates between two values -1 and +1 at a sampling frequency that is higher than that of the input signal. Depending on the value assumed by the output signal of the delta/sigma module, a multiplexer alternatively switches to the output of the modulator a first or a second oscillator signal, which both have an intermediate frequency, but are in phase opposition to each other, since they together form a differential output signal of an oscillator. The modulator thus easily carries out a phase modulation of the output signal of the first oscillator and delivers an output signal that has for its frequency the intermediate frequency and a phase that is representative of that of the input signal.

The multiplexer receives first and second control signals that are correlated. Thus, the noise generated by the modulation performed by the modulator is solely linked with the phase quantification and is independent of the amplitude quantization.

In an advantageous embodiment of the invention, the delta/sigma modules have an adjustable gain.

Such an embodiment permits to influence the gain of the whole transmission circuit and thus to influence the gain of the aforementioned frequency converter, which enables to simplify the design and the mode of operation thereof.

If the present invention can be used in all types of devices intended for the transmission of radio signals, its use is particularly advantageous in radiotelephones. The invention thus also relates to a radiotelephone apparatus comprising a signal processing unit and an antenna intended to transmit a radio frequency signal, the radiotelephone apparatus further includes a transmission circuit as described above, intended to receive an input signal from the signal processing unit and to deliver the radio frequency signal to the antenna.

### BRIEF DESCRIPTION OF THE DRAWINGS

These and other aspects of the invention are apparent from and will be elucidated, by way of non-limitative example, with reference to the embodiment(s) described hereinafter.

In the drawings:
- Fig. 1 is a function diagram describing a transmission circuit,
- Fig. 2 is a Fresnel diagram describing the splitting up of an input signal,
- Fig. 3 is a function diagram describing a delta/sigma module,
- Fig. 4 is a timing diagram describing the evolution of the input and output signals of such a delta/sigma module,
- Fig. 5 is a function diagram describing a transmission circuit in accordance with an embodiment of the invention and
- Fig. 6 is a function diagram describing a transmission circuit in accordance with another embodiment of the invention.

### DESCRIPTION OF PREFERRED EMBODIMENTS

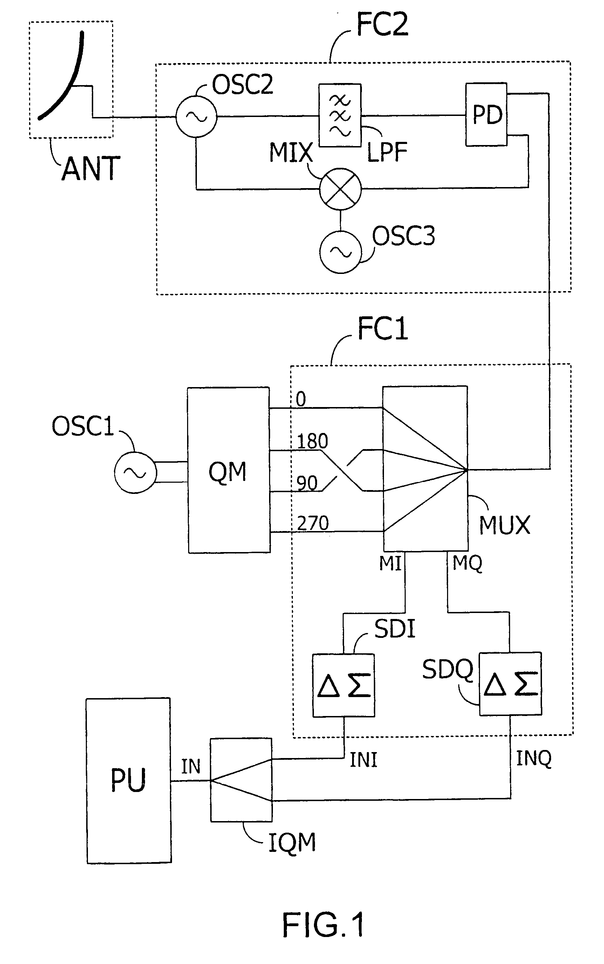

Fig. 1 diagrammatically shows a signal transmitter, for example a radiotelephone, including a transmission circuit. This circuit is intended to receive from a signal processing unit PU a digital input signal IN and to deliver a radio frequency signal to an antenna ANT. The transmission circuit comprises:
- a first frequency converter FC1 having four inputs called reference inputs intended to receive from a first oscillator OSC1 two differential signals (0; 180) and (90; 270) which have an intermediate frequency, and one output intended to deliver an output signal which has for its frequency the intermediate frequency and a phase representative of that of the input signal, and
- a second frequency converter FC2 having one output, which forms the output of the transmission circuit and is intended to deliver the radio frequency signal resulting from a conversion of the frequency of the output signal of the first frequency converter FC1 into a tunable frequency.

As described here, the digital input signal IN is split up into a first and a second input signal INI and INQ, having phases in quadrature and representative of data carried by the digital input signal IN, by means of a quadratic module IQM. The first frequency converter FC1 comprises a first delta/sigma module SDI which has an output intended to deliver a first control signal MI of which a mean value is equal to the value of the first input signal INI. The first frequency converter FC1 further includes a second delta/sigma module SDQ which has an output intended to deliver a second control signal MQ of which a mean value is equal to the value of the second input signal INQ. The first frequency converter FC1 finally includes a multiplexer MUX which has four signal inputs forming the four reference inputs of the first frequency converter FC1 and intended to receive the two difference signals (0; 180) and (90; 270) coming from a first oscillator OSC1, via another quadratic module QM. The multiplexer MUX further has a first and a second control input connected to the outputs of the first and second delta/sigma modules, and a signal output that forms the output of the first frequency converter FC1. Each delta/sigma module SDI and SDQ produces a signal that oscillates between two values -1 and +1 at a sampling frequency that is higher than that of its input signal INI or INQ. Depending on the pair of values assumed by the pair of control signals (MI; MQ), the multiplexer MUX alternatively switches to the output of the first frequency converter FC1 one of the signals (0, 90, 180, 270) that it receives on its reference inputs which have all the intermediate frequency, two successive signals being in phase quadrature with each other since they constitute in pairs differential signals in phase quadrature coming from the first oscillator OSC1. The first frequency converter FC1 then easily carries out a phase modulation of the output signal of the first oscillator OSC1 and delivers an output signal that has the intermediate frequency and a phase representative of that of the input signal IN.

If a choice has been made to split up the input signal IN into two components INI and INQ, it may also be envisaged to use only a single delta/sigma module that directly receives the input signal IN, while the multiplexer MUX thus has only two signal inputs which form the only two reference inputs of the first frequency converter FC1 and are intended to receive only a single differential signal (0; 180) coming from the first oscillator OSC1. The structure of the first frequency converter FC1, and thus that of the whole transmission circuit, will thus be simplified, but the resolution of the phase modulation performed by the first frequency converter FC1 will be reduced by half.

In Fig. 1, the second frequency converter FC2 is formed by a phase-locked loop which includes a phase detector PD that has a first input connected to the output of the first frequency converter FC1, a second input, and an output intended to deliver a signal representative of a phase difference between signals present on the first and the second input. The phase-locked loop further includes a second oscillator OSC2, which has a tunable input connected to the output of the phase detector PD, and an output that forms the output of the second frequency converter FC2. A low-pass filter LPF is inserted between the phase detector PD and the second oscillator OSC2. The phase-locked loop finally includes a mixer MIX, which has a first input connected to the output of the second oscillator OSC2, a second input connected to an output of a third oscillator OSC3, and an output connected to the second input of the phase detector PD.

Other examples, based on a mixer, may be envisaged for constructing the second frequency converter FC2. However, the second frequency converter FC2 described by Fig. 1 is advantageous in that the phase-locked loop generates a radio frequency signal that has an outstanding spectral purity. Moreover, the frequency of the output signal of the transmission circuit may be tuned by modifying that of the output signal of the third oscillator OSC3. None the less, a certain number of constraints are the result of the structure described above: first of all, the difference between the frequencies of the output signals of the second and the third oscillator OSC2 and OSC3 must be equal to the value of the intermediate frequency, and the value of the gain of the phase-locked loop is to be such that it does not jeopardize the stability of said loop. In the following of the description there will be demonstrated that the invention largely enables to mitigate these constraints.

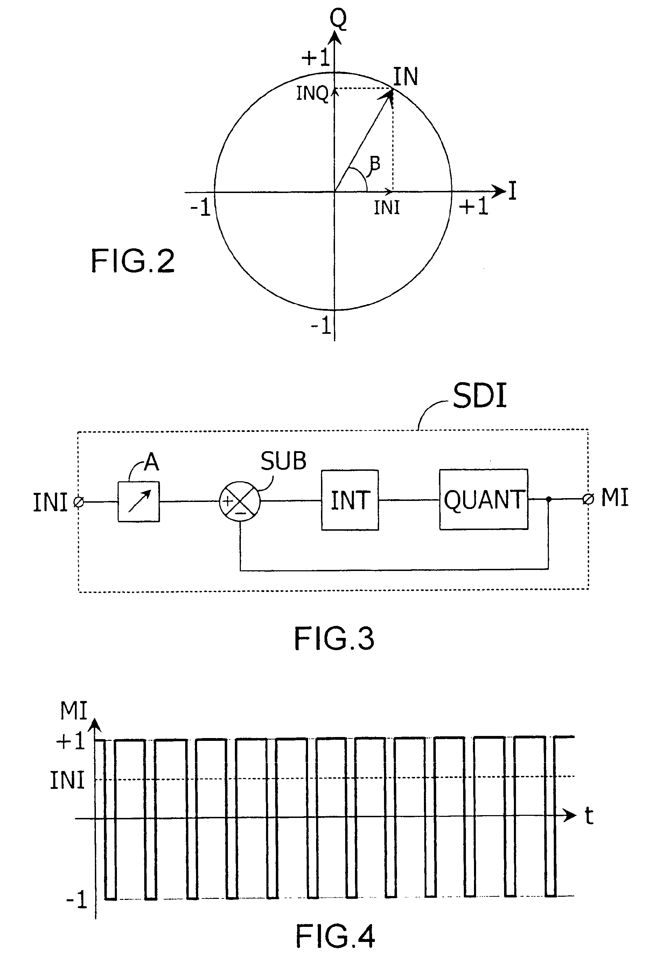

Fig. 2 is a Fresnel diagram whose axes I and Q support a circle describing the evolution of a vector that represents the input signal IN of the transmission circuit described previously. According to this Fresnel diagram, the splitting up of the input signal IN into two signals INI and INQ in phase quadrature with each other may be interpreted as the projection of the vector IN on the axes I and Q. The signals INI and INQ are respectively the cosine and sine of the angle β that represents the phase of the input signal IN.

Fig. 3 diagrammatically shows an embodiment of a delta/sigma module SDI. The basic structure of such a delta/sigma module SDI is known to the expert and comprises a subtracter SUB intended to receive on a first input the input signal of the delta/sigma module, an integrator INT intended to integrate the output signal of the subtracter SUB, and a quantizer QUANT intended to deliver on an output a signal equal to -1 or +1 as a function of the value of the output signal of the integrator INT. The output of the quantizer QUANT forms the output of the delta/sigma module and is further connected to a second input of the subtracter SUB. Such a structure is commonly called a structure of the first order. In other embodiments there may be chosen for realizing the delta/sigma module, a structure of the N^{th} order, formed by N interleaved structures of the first order. In Fig. 3, the delta/sigma module comprises a module A whose gain is variable. This module A enables to influence the gain of the whole transmission circuit, and thus the gain of the second frequency converter, which enables to simplify thereof the design and mode of operation. Indeed, if in certain operating conditions the gain of the phase-locked loop which forms the second frequency converter becomes, for example, sufficiently high to jeopardize the stability of said loop, it will be sufficient to diminish the gain of the variable gain modules A included in the delta/sigma modules to preserve said stability. This possibility renders the constraints to which the oscillators included in the transmission circuit are subjected considerably more flexible, which constraints may in certain cases form an obstacle for the realization of said oscillators in integrated form.

Fig. 4 describes in the form of a timing diagram the evolution plotted against time of the output signal MI of the delta/sigma module described above. To facilitate the comprehension of the invention, the represented case is that shown by Fig. 2 where INI = cosβ = 0.5 and the variable gain delta/sigma module A works as a follower having a gain equal to 1. The delta/sigma module SDI produces a signal MI oscillating between two values -1 and +1 at a sampling frequency that is higher than that of the input signal INI, the mean value of the output signal MI being equal to the value of the input signal INI. Since the second delta/sigma module SDQ has a structure that is identical to that described earlier, but is intended to receive an input signal INQ in phase quadrature to the input signal INI of the first delta/sigma module SDQ, it is clear that the pair of signals (MI, MQ) received by the multiplexer MUX on its two selection inputs, connected to the outputs of the first and second delta/sigma modules SDI and SDQ, will alternatively present each of the four possible combinations of the states -1 and +1. The multiplexer will thus alternatively select each of the signals (0, 90, 180, 270) present on its reference inputs. The first frequency converter FC1 will thus perform a phase modulation of the output signal of the first oscillator OSC1 as a function of the phase β of the input signal IN.

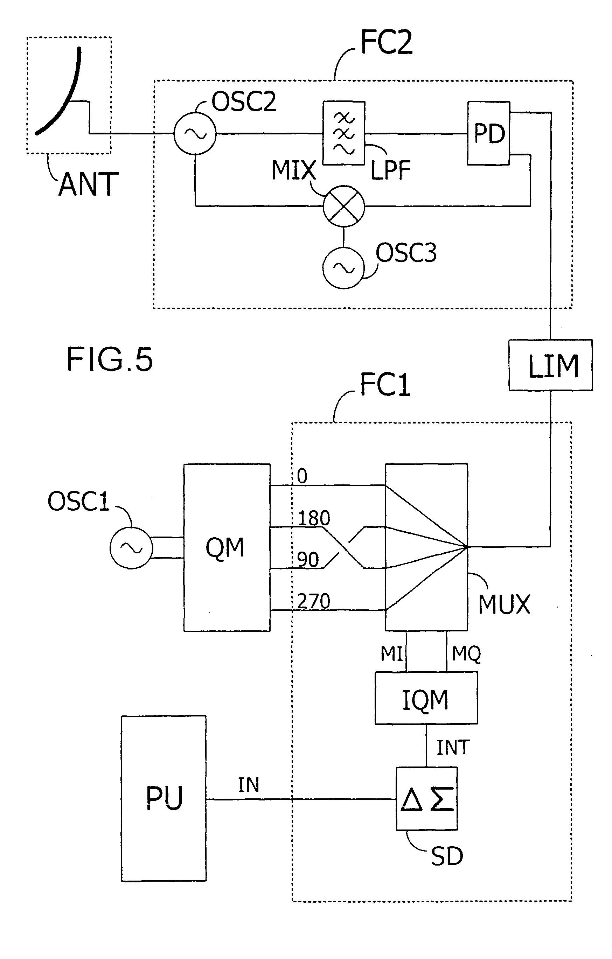

Fig. 5 diagrammatically shows a signal transmitter device, for example, a radio telephone, including a transmission circuit in accordance with an embodiment of the invention. As far as possible, the elements common to this transmission circuit and that described before are assigned identical references and will not be described again here. In this particular embodiment, the first frequency converter FC1 comprises a sole delta/sigma module SD intended to deliver an intermediate signal INT of which an average value is equal to the value of the input signal IN. The first frequency converter FC1 further includes a module called quadratic module IQM intended to split up the intermediate signal INT into a first and a second control signal MI and MQ whose phases are in quadrature with each other and represent data carried by the input signal IN. The multiplexer MUX has four signal inputs which form four reference inputs of the first frequency converter FC 1 and are intended to receive two differential signals (0; 180) and (90; 270) in phase quadrature with each other coming from the first oscillator OSC1, a first and a second control input intended to receive the first and the second control signal MI and MQ respectively, and a signal output forming the output of the first frequency converter FC1. In certain embodiments, the quadratic module IQM could be realized even inside the delta/sigma module SD.

This variant is advantageous because of the fact that the first and second control signals MI and MQ are correlated. Thus, the noise generated by the modulation performed by the first frequency converter FC1 is solely linked with a phase quantization and is independent of an amplitude quantization. This implies that it is possible to use a limiter LIM on the output of the first frequency converter FC1, which limiter LIM is intended to transform the output signal of the first frequency converter into a square-wave signal by subjecting it to a large amplification which causes a systematic peak limiting. The useful information contained in the output signal of such a limiter will thus solely be represented by the switchings of the output signal of the limiter, and thus be purely digital. This will permit to considerably simplify the structure of the second frequency converter FC2. More particularly, the phase detector PD may in this variant be formed by a simple phase/frequency comparator, whereas an analog multiplier would be necessary, in order to preserve a linear mode of operation, if the signal coming from the first frequency converter were analog. The second frequency converter FC2 can also be designed, in essence, in digital technology, which will simplify the structure and diminish the cost thereof while the performance will be improved.

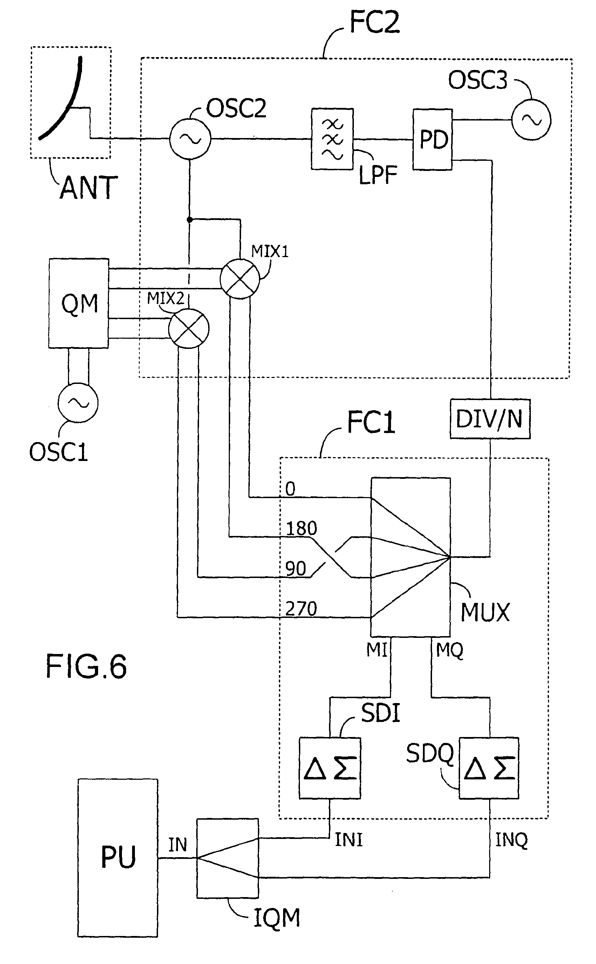

Fig. 6 diagrammatically shows a signal transmitter, for example, a radiotelephone, including a transmission circuit in accordance with another embodiment of the invention. As often as possible, the elements common to this transmission circuit and that described by Fig. 1 are assigned identical references and will not be described again here. In this particular embodiment, the second frequency converter FC2 is formed by a phase-locked loop which comprises a phase detector PD, which has a first input connected to the output of the first frequency converter FC1, a second input, and an output intended to deliver a signal representative of a phase difference between signals present on the first and the second input. The phase-locked loop further includes a second oscillator OSC2, which has a tuning input connected to the output of the phase detector PD and an output that forms the output of the second frequency converter. A low-pass filter LPF is inserted between the phase detector PD and the second oscillator OSC2. The phase-locked loop further includes a third oscillator OSC3 of which an output is connected to the second input of the phase detector PD. The first oscillator OSC1 delivers, via a quadratic module QM, two differential signals in phase quadrature with each other, whose frequency is of the same order of magnitude as that of the output signal of the second oscillator OSC2. The phase-locked loop finally includes a double mixer (MIX1, MIX2) having two symmetrical inputs connected, via the quadratic module QM, to the output of the first oscillator OSC1. The double mixer (MIX1, MIX2) has another input connected to the output of the second oscillator OSC2, and two symmetrical outputs connected to four reference inputs of the first frequency converter FC1, and intended to receive two differential signals (0; 180) and (90; 270) in phase quadrature with each other, and having the intermediate frequency.

This embodiment of the second frequency converter FC2 is advantageous in that the phase-locked loop generates a radio signal that has an outstanding spectral purity. Moreover, the frequency of the output signal of the transmission circuit may be tuned by modifying that of the output signal of the first oscillator OSC1, because the intermediate frequency is fixed and equal to the difference between the frequencies of the output signals of the first and the second oscillator OSC1 and OSC2.

If, in this embodiment, the choice is made to split up the input signal IN into two components INI and INQ, it may also be envisaged to use only a single delta/sigma module which directly receives the input signal IN, the multiplexer MUX thus having only two signal inputs which form the only two reference inputs of the first frequency converter FC1 and which multiplexer is intended to receive only a single differential signal (0, 180) coming from a single mixer MX1. The structure of the first frequency converter FC1, and thus that of the whole transmission circuit, will thus be simplified, but the resolution of the phase modulation realized by the first frequency converter FC1 will be reduced by half.

Besides, in a variant of the embodiment described with reference to Fig. 6, it is possible to utilize a single delta/sigma module, intended to receive the input signal IN from the signal processing unit PU, and to split up the output signal of such a delta/sigma module into two control signals MI and MQ which are in phase quadrature with each other, which will enable to insert a limiter between the output of the first frequency converter and the frequency divider, with the advantages cited above.

In the embodiment described here, the signals incoming at the reference inputs of the first frequency converter FC1 have already been modulated, because of the mixing realized by the double mixer (MX1, MX2). Thus, the phase modulation realized by the first frequency converter FC1, although apparent in the output signal of the transmission circuit, is not significantly apparent in the output signal of the first frequency converter FC1. This authorizes the insertion of a frequency divider DIV/N between the first and second frequency converters FC1 and FC2, which gives an additional degree of liberty for adjusting the values of the frequencies of the output signals of the various oscillators included in the transmission circuit, which simplifies the design and mode of operation thereof.

More particularly, the frequency of the output signal of the third oscillator OSC3 will no longer have to be equal to the intermediate frequency. Advantageously, an oscillator already existing in another part of the transmitter(not shown in the Figure), can be used for realizing the third oscillator OSC3, such as, for example, an oscillator whose oscillation frequency is used as a reference for a phase-locked loop included in a receiving circuit present in the device.

## Claims

1. A transmission circuit having at least one input for receiving an input signal (IN) that carries data, the transmission circuit comprising a first oscillator (OSC1) and a modulator (FC1) comprising:
- a delta/sigma module (SD) having an input for receiving said input signal (IN) and output for delivering an intermediate signal (INT) of which a mean value is equal to the value of the input signal (IN),
- quadratic module (IQM) for splitting up the intermediate signal into a first and a second control signal whose respective phases are in quadrature with each other and represent data conveyed by said input signal, and
- a multiplexer (MUX) having four inputs for receiving two differential signals, which are in phase quadrature with each other, coming from said first oscillator (OSC1), a first and a second control input for receiving said first and said second control signal, respectively, from the quadratic module, and one output, which forms the output of the modulator (FC1), for providing an output signal having a predetermined frequency called intermediate frequency and a phase that represents data conveyed by the input signal.

2. A transmission circuit as claimed in claim 1, the transmission circuit comprising a frequency converter (FC2) receiving said output from said modulator and having an output that forms the output of the transmission circuit and is adapted to deliver a radio frequency signal resulting from a conversion of the frequency of the output signal of the modulator (FC1) into an adjustable frequency.

3. A transmission circuit as claimed in claim 2, wherein the delta/sigma module (SD) has an adjustable gain.

4. A transmission circuit as claimed in claim 2, wherein the frequency converter (FC2) is formed by a phase-locked loop, comprising:
. a phase detector (PD) having a first input connected to the output of the modulator (FC1), a second input, and an output intended to deliver a signal representative of a phase difference between signals present on the first and second input,
. a second oscillator (OSC2) having a tuning input connected to the output of the phase detector, and an output forming the output of the frequency converter,
. a third oscillator (OSC3), and
. a mixer (MIX) having a first input connected to the output of the second oscillator, a second input connected to an output of said third oscillator (OSC3), and an output connected to the second input of the phase detector.

5. A transmission circuit as claimed in claim 2, wherein the frequency converter (FC2) is formed by a phase-locked loop, comprising:
. a phase detector (PD) having a first input connected to the output of the modulator (FC1), a second input, and an output intended to deliver a signal representative of a phase difference between signals present on the first and the second input,
. a second oscillator (OSC2) having a tuning input connected to the output of the phase detector, and an output forming the output of the frequency converter,
. a third oscillator (OSC3) of which an output is connected to the second input of the phase detector, and
. a mixer (MIX1, MIX2) having a first input connected to the output of the first oscillator (OSC1), a second input connected to the output of the second oscillator, and for outputs providing said two differential signals to said modulator (FC1).

6. A radiotelephone apparatus comprising a signal processing unit (PU) and an antenna (ANT) intended to transmit a radio frequency signal, the radiotelephone apparatus further includes a transmission circuit as claimed in claim 2, coupled to receive the input signal (IN) from the signal processing unit and to deliver the radio frequency signal to the antenna.

## Patentansprüche

1. Sendeschaltung mit wenigstens einem Eingang zum Empfangen eines Eingangssignals (IN), das Daten trägt, wobei die Sendeschaltung einen ersten Oszillator (OSC1) und einen Modulator (FC) aufweist, der Folgendes umfasst:
- ein Delta/Sigma-Modul (SD) mit einem Eingang zum Empfangen des genannten Eingangssignals (IN) und mit einem Ausgang zum Liefern eines Zwischensignals (INT), von dem ein Mittelwert dem Wert des Eingangssignal (IN) entspricht,
- ein quadratisches Modul (IQM) zum Aufteilen des Zwischensignals in ein erstes und ein zweites Steuersignal, deren betreffende Phasen zueinander in Quadratur sind und Daten darstellen, die von dem genannten Eingangssignal befördert werden, und
- einen Multiplexer (MUX) mit vier Eingängen zum Empfangen von zwei differenziellen Signalen, die zueinander in Phasenquadratur sind, herrührend von dem genannten ersten Oszillator (OSC1), einen ersten und einen zweiten Steuereingang zum Empfangen des genannten ersten und zweiten Steuersignals von dem quadratischen Modul, und einen Ausgang, der den Ausgang des Modulators (FC1) bildet, zum Liefern eines Ausgangssignals mit einer vorbestimmten Frequenz, die als Zwischenfrequenz bezeichnet wird, und mit einer Phase, die Daten darstellt, die von dem Eingangssignal befördert werden.

2. Sendeschaltung nach Anspruch 1, wobei diese Schaltungsanordnung Folgendes umfasst: einen Frequenzwandler (FC2), der das genannte Ausgangssignal von dem genannten Modulator empfängt, mit einem Ausgang, der den Ausgang der Sendeschaltung bildet und vorgesehen ist zum Liefern eines Funkfrequenzsignals, herrührend von einer Umwandlung der Frequenz des Ausgangssignals des Modulators (FC1) in eine einstellbare Frequenz.

3. Sendeschaltung nach Anspruch 2, wobei das Delta/Sigma-Modul (SD) eine einstellbare Verstärkung hat.

4. Sendeschaltung nach Anspruch 2, wobei der Frequenzwandler (FC2) durch eine phasenverriegelte Schleife gebildet wird, die Folgendes umfasst:
- eine Phasendetektor (PD) mit einem ersten Eingang, der mit dem Ausgang des Modulators (FC1) verbunden ist, einem zweiten Eingang, und einem Ausgang, vorgesehen zum Liefern eines Signals, das für die Phasendifferenz zwischen Signalen an dem ersten und zweiten Eingang repräsentativ ist,
- einen zweiten Oszillator (OSC2) mit einem Abstimmeingang, der mit dem Ausgang des Phasendetektors verbunden ist, und mit einem Ausgang, der den Ausgang des Frequenzwandlers bildet, einen dritten Oszillator (OSC3), und
- einen Mischer (MIX) mit einem ersten Eingang, der mit dem Ausgang des zweiten Oszillators verbunden ist, mit einem zweiten Eingang, der mit einem Ausgang des genannten dritten Oszillators (OSC3) verbunden ist, und mit einem Ausgang, der mit dem zweiten Eingang des Phasendetektors verbunden ist.

5. Sendeschaltung nach Anspruch 2, wobei der Frequenzwandler (FC2) durch eine phasenverriegelte Schleife gebildet wird, die Folgendes umfasst:
- einen Phasendetektor (PD) mit einem ersten Eingang, der mit dem Ausgang des Modulators (FC1) verbunden ist, mit einem zweiten Eingang, und mit einem Ausgang, vorgesehen zum Liefern eines Signals, das für eine Phasendifferenz zwischen Signalen an dem ersten und dem zweiten Eingang repräsentativ ist,
- einen zweiten Oszillator (OSC2) mit einem Abstimmeingang, der mit dem Ausgang des Phasendetektors verbunden ist, und mit einem Ausgang, der den Ausgang des Frequenzwandlers bildet,
- einen dritten Oszillator (OSC3), von dem ein Ausgang mit dem zweiten Eingang des Phasendetektors verbunden ist, und
- einen Mische (MIX1, MIX2), von dem ein erster Eingang mit dem Ausgang des ersten Oszillators (OSC1) verbunden ist, von dem ein zweiter Eingang mit dem Ausgang des zweiten Oszillators verbunden ist, und Ausgänge, welche die genannten zwei Differenzsignale dem genannten Modulator (FC1) zuführen.

6. Funktelefongerät mit einer Signalverarbeitungseinheit (PU) und einer Antenne (ANT), vorgesehen zum Übertragen eines Funkfrequenzsignals, wobei das Funktelefongerät weiterhin eine Sendeschaltung nach Anspruch 2 aufweist, die derart gekoppelt ist, dass sie das Eingangssignal (IN) von der Signalverarbeitungseinheit empfängt und das Funkfrequenzsignal zu der Antenne liefert.

## Revendications

1. Circuit de transmission ayant au moins une entrée pour recevoir un signal d'entrée (IN) qui achemine des données, le circuit de transmission comprenant un premier oscillateur (OSC1) et un modulateur (FC1) comportant:
- un modulateur delta/sigma (SD) ayant une entrée pour recevoir ledit signal d'entrée (IN) et une sortie pour fournir un signal intermédiaire (INT) dont une valeur moyenne est égale à la valeur du signal d'entrée (IN),
- un module quadratique (IQM) pour diviser le signal intermédiaire en un premier et un second signal de commande dont les phases respectives sont en quadrature l'une avec l'autre et représentent des données acheminées par ledit signal d'entrée, et
- un multiplexeur (MUX) ayant quatre entrées pour recevoir deux signaux différentiels, qui sont en quadrature de phase l'un avec l'autre, provenant dudit premier oscillateur (OSC1), une première et une seconde entrée de commande pour recevoir lesdits premier et second signaux de commande, respectivement, du module quadratique, et une sortie qui forme la sortie du modulateur (FC1), pour fournir un signal de sortie ayant une fréquence prédéterminée appelée fréquence intermédiaire et une phase qui représente des données acheminées par le signal d'entrée.

2. Circuit de transmission suivant la revendication 1, le circuit de transmission comprenant un convertisseur de fréquence (FC2) recevant ladite sortie dudit modulateur et ayant une sortie qui forme la sortie du circuit de transmission et est à même de fournir un signal de radiofréquence résultant d'une conversion de la fréquence du signal de sortie du modulateur (FC1) en une fréquence réglable.

3. Circuit de transmission suivant la revendication 2, dans lequel le module delta/sigma (SD) a un gain réglable.

4. Circuit de transmission suivant la revendication 2, dans lequel le convertisseur de fréquence (FC2) est formé par une boucle à asservissement de phase, comprenant:
- un détecteur de phase (PD) ayant une première entrée connectée à la sortie du modulateur (FC1), une seconde entrée, et une sortie destinée à fournir un signal représentatif d'une différence de phase entre des signaux présents sur la première et la seconde entrée,
- un deuxième oscillateur (OSC2) ayant une entrée d'accord connectée à la sortie du détecteur de phase, et une sortie formant la sortie du convertisseur de fréquence,
- un troisième oscillateur (OSC3), et
- un mélangeur (MIX) ayant une première entrée connectée à la sortie du deuxième oscillateur, une seconde entrée connectée à la sortie dudit troisième oscillateur (OSC3), et une sortie connectée à la seconde entrée du détecteur de phase.

5. Circuit de transmission suivant la revendication 2, dans lequel le convertisseur de fréquence (FC2) est formé par une boucle à asservissement de phase comprenant:
- un détecteur de phase (PD) ayant une première entrée connectée à la sortie du modulateur (FC1), une seconde entrée, et une sortie destinée à fournir un signal représentatif d'une différence de phase entre des signaux présents sur la première et la seconde entrée,
- un deuxième oscillateur (OSC2) ayant une entrée d'accord connectée à la sortie du détecteur de phase, et une sortie formant la sortie du convertisseur de fréquence,
- un troisième oscillateur (OSC3) dont une sortie est connectée à la seconde entrée du détecteur de phase, et
- un mélangeur (MIX1, MIX2) ayant une première entrée connectée à la sortie du premier oscillateur (OSC1), une seconde entrée connectée à la sortie du deuxième oscillateur, et pour des sorties fournissant lesdits deux signaux différentiels audit modulateur (FC1).

6. Appareil de radiotéléphonie comprenant une unité de traitement de signaux (PU) et une antenne (ANT) destinée à transmettre un signal de radiofréquence, l'appareil de radiotéléphonie comprenant en outre un circuit de transmission suivant la revendication 2, couplé pour recevoir le signal d'entrée (IN) de l'unité de traitement de signaux et pour fournir le signal de radiofréquence à l'antenne.
